# FASCICULE DE BREVET EUROPEEN

(11) **EP 0 706 492 B1**
(45) Date de publication et mention de la délivrance du brevet: **29.12.1997**
(21) Numéro de dépôt: 95915733.0
(22) Date de dépôt: 02.05.1995
(51) Int. Cl.: B65G 47/51, B65G 17/16, A23G 7/00

(54) **INSTALLATION DE STOCKAGE PENDULAIRE**
PENDELARTIGE LAGEREINRICHTUNG
SUSPENDED STORAGE APPARATUS

(30) Priorité: 03.05.1994 FR 9405777
(43) Date de publication de la demande: 17.04.1996
(73) Titulaire: SAPAL, Société Anonyme des Plieuses Automatiques, 1400 Ecublens (CH)
(72) Inventeur: WALSER, Hans, Heiri, CH-7214 Grüsch (CH); ALIESCH, Hans, Peter, CH-6005 Lucerne (CH); HOFMANN, Armin, CH-1030 Bussigny (CH)
(74) Mandataire: Nithardt, Roland
(86) Numéro de dépôt international: CH9500097
(87) Numéro de publication internationale: WO9529862

(56) Documents cités:
- BE-A- 626 027
- GB-A- 719 696
- NL-A- 7 810 791

## Description

La présente invention concerne une installation de stockage pendulaire pour stocker momentanément des produits, notamment des produits alimentaires et plus particulièrement des plaques de chocolat ou similaires, ces produits étant déposés sur des tablettes disposées horizontalement sur des gondoles pendues horizontalement à deux chaînes montées sur un bâti et cheminant parallèlement entre elles sur un circuit fermé, cette installation comprenant une section d'alimentation allant d'une station de dépôt des produits sur les tablettes, à une station réceptrice de ces produits agencée pour décharger les tablettes, et une section de retour dans laquelle les tablettes sont ramenées vides de la station réceptrice à la station de dépôt.

Un telle installation de stockage pendulaire, est décrite dans la demande de brevet européen publiée sous le numéro 0 538 742 A1. Dans les lignes de production de produits alimentaires, par exemple les plaques de chocolat, les biscuits, les produits enrobés de chocolat et autres produits fragiles et délicats à manipuler, il est souvent nécessaire de pouvoir disposer d'une installation de stockage momentané de ces produits étant donné que la production est effectuée en continu alors que le conditionnement se fait en discontinu et que les unités de conditionnement d'une même ligne sont soumises périodiquement à des temps d'arrêt requis pour l'entretien, la réparation ou la mise en place du matériau d'emballage.

Ces installations de stockage doivent répondre à un cahier des charges relativement lourd. Elles doivent permettre un stockage de grande capacité et assurer un transport efficace et soigné des produits d'une station de dépôt vers une station réceptrice, en offrant un maximum de sécurité aux produits véhiculés, une grande souplesse d'utilisation et un potentiel de stockage variable en fonction de la demande instantanée.

Un des problèmes qui se pose pour ces installations est celui de la maintenance et du nettoyage régulier des tablettes, pour satisfaire aux normes d'hygiène, notamment lorsque les produits à stocker sont du type alimentaire et susceptibles d'encrasser les tablettes. Sur les installations existantes, ce nettoyage ne peut être effectué qu'à l'arrêt, ce qui impose à l'utilisateur des temps de pose importants et constitue de ce fait un handicap particulièrement gênant qui a un effet négatif sur la productivité de l'installation.

Dans les installations de stockage pendulaire, telles que celle décrite par le brevet britannique No. 719 696, les tablettes, pour autant qu'elles soient amovibles, ne sont généralement pas réversibles ou comportent des rebords qui rendent difficiles le stockage, le nettoyage ou la mise en place automatique après une opération de nettoyage.

En outre, la forme et la conception de ces tablettes ne se prêtent généralement pas à un nettoyage simple et efficace. De multiples rebords constituent autant de niches d'accumulation et de développement des bactéries qui imposent des procédés de nettoyage et d'aseptisation complexes et coûteux.

Enfin, la forme asymétrique des plateaux crée des problèmes au moment de la remise en place après nettoyage, notamment si cette remise en place est automatisée, parce qu'elle nécessite un indexage des plateaux ou des moyens de repérage de leur position.

La présente invention se propose de pallier les inconvénients ci-dessus en réalisant une installation de stockage du type défini en préambule et qui permet un remplacement régulier des tablettes sans que le fonctionnement de l'installation soit arrêtée, voire perturbée, les tablettes étant conçues pour pouvoir subir un nettoyage rapide et efficace, et pour garantir au mieux les normes d'hygiène requises lorsque les produits à traiter sont du type alimentaires.

La solution technique par rapport auxdits problèmes est caractérisée par les caractéristiques indiquées dans la seconde partie de la revendication 1.

La présente invention sera mieux comprise en référence à la description de modes de réalisation préférés donnés à titre d'exemples non limitatifs et aux dessins annexés dans lesquels :
la figure 1 représente une vue en perspective schématique d'une installation selon l'invention,
la figure 2 représente une vue schématique en élévation d'une gondole de l'installation selon l'invention, et
les figures 3, 4, 5, 6 et 7 représentent diverses vues illustrant une forme de réalisation des tablettes portées par les gondoles.

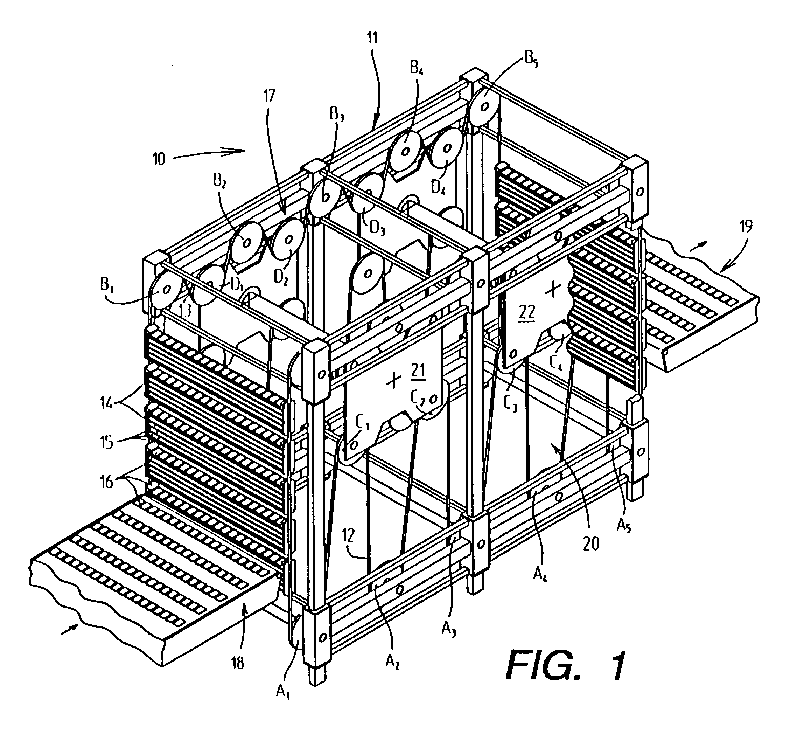

En référence à la figure 1, l'installation de stockage pendulaire 10, représentée en perspective, se compose principalement d'un bâti 11 qui, dans ce cas, a la forme d'un parallélépipède rectangle qui définit un espace de stockage à l'intérieur duquel sont montées deux chaînes de transport sans fin 12 et 13 entre lesquelles sont suspendues des gondoles 14 portant des tablettes 15 sur lesquels sont déposés les produits 16. Les gondoles 14 sont suspendues horizontalement par deux pivots latéraux aux chaînes 12 et 13 qui se déplacent parallèlement entre elles selon un trajet à boucles multiples comportant une première section dite section d'alimentation 17 allant d'une station de dépôt 18 des produits sur les tablettes à une station réceptrice 19, agencée pour décharger lesdits tablettes, et une seconde section 20 dite section de retour dans laquelle les tablettes préalablement déchargés retournent de la station réceptrice à la station de dépôt. Dans l'exemple représenté, l'installation comporte cinq paires de roues dentées inférieures respectivement A1, A2, A3, A4, A5 et cinq paires de roues dentées supérieures respectivement B1, B2, B3, B4, B5 qui sont montées sur des axes fixes portés par le bâti. Par ailleurs, l'installation comporte, dans l'exemple représenté, deux chariots mobiles en hauteur respectivement 21 et 22 qui portent chacun deux roues dentées inférieures C1, C2 (pour le chariot 21) et C3, C4 (pour le chariot 22) et deux roues supérieures D1, D2 (pour le chariot 21) et D3, D4 (pour le chariot 22). La section d'alimentation du circuit fermé défini par les deux chaînes 12 et 13 se compose des segments de chaîne passant de la station de dépôt à la verticale de la roue B1, puis par-dessus cette roue, en dessous de la roue supérieure D1 du chariot 21, au-dessus de la roue B2, en dessous de la roue supérieure D2 du chariot 21, puis au-dessus de la roue B3, en dessous de la roue supérieure D3 du chariot 22, au-dessus de la roue B4, en dessous de la roue supérieure D4 du chariot 22, et au-dessus de la roue B5 pour redescendre à la verticale jusqu'à la station réceptrice. La section de retour est définie par les tronçons de chaînes allant de la station de retour en dessous de la roue A5 puis au-dessus de la roue inférieure C4 du chariot 22, en dessous de la roue A4, au-dessus de la roue inférieure C3 du chariot 22, en dessous de la roue A3, au-dessus de la roue inférieure C2 du chariot 21, en dessous de la roue A2, au-dessus de la roue inférieure C1 du chariot 21, et enfin en dessous de la roue Al pour revenir à la verticale de la station de dépôt. Grâce aux chariots mobiles, l'installation de stockage a une capacité d'accumulation ou de stockage variable. Lorsque les chariots sont en position haute, la section d'alimentation est minimale, c'est-à-dire que les produits sont acheminés le plus rapidement possible de la station de dépôt à la station réceptrice. En revanche, lorsque les chariots descendent vers une position basse, la longueur de la section d'alimentation augmente de même que la capacité de stockage de l'installation.

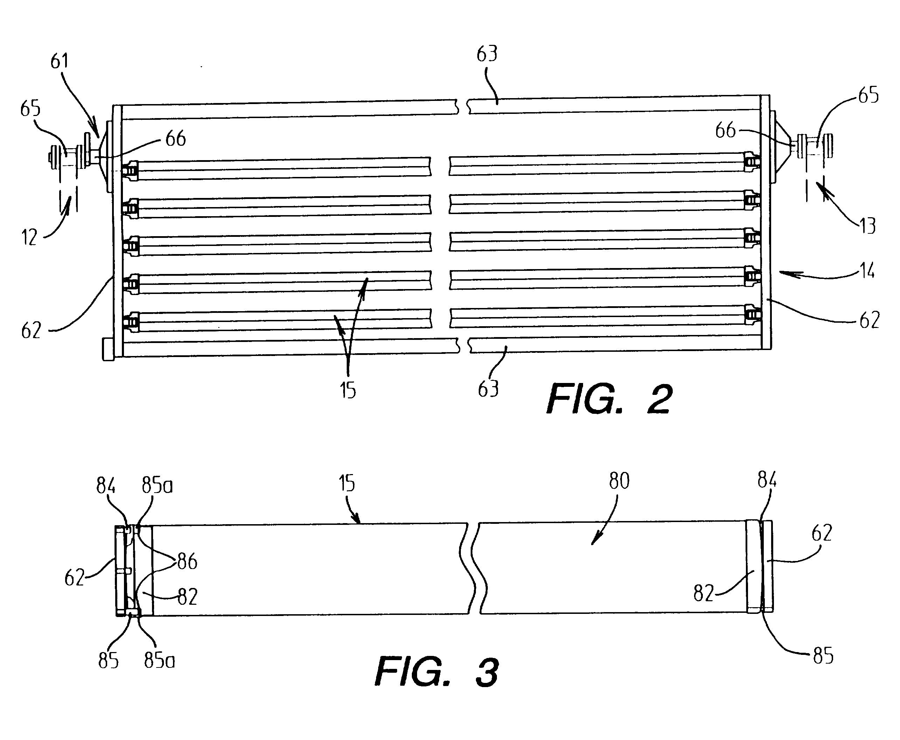

La figure 2 représente une vue en élévation d'une des gondoles 14 portant les tablettes 15.

Chaque gondole 14 est constituée d'un cadre formé de deux supports latéraux 62 reliés par deux longerons 63 montés parallèlement aux extrémités respectives des supports 62. Ces supports 62 comportent des moyens permettant d'assurer la fixation des tablettes 15 qui sont de préférence montées de manière sur les gondoles et disposées parallèlement entre elles. La gondole 14 est suspendue par ses supports latéraux 62 à des maillons 65 des deux chaînes 12 et 13. Les supports 62, et par conséquent la gondole 14, sont pendus à deux pivots horizontaux 66 qui constituent en fait un prolongement de l'axe des maillons 65. Un dispositif amortisseur 61 est de préférence monté d'un côté de la gondole 14. Toutefois, un tel dispositif pourrait être adapté des deux côtés pour obtenir un effet d'amortissement plus important du mouvement pendulaire de la gondole.

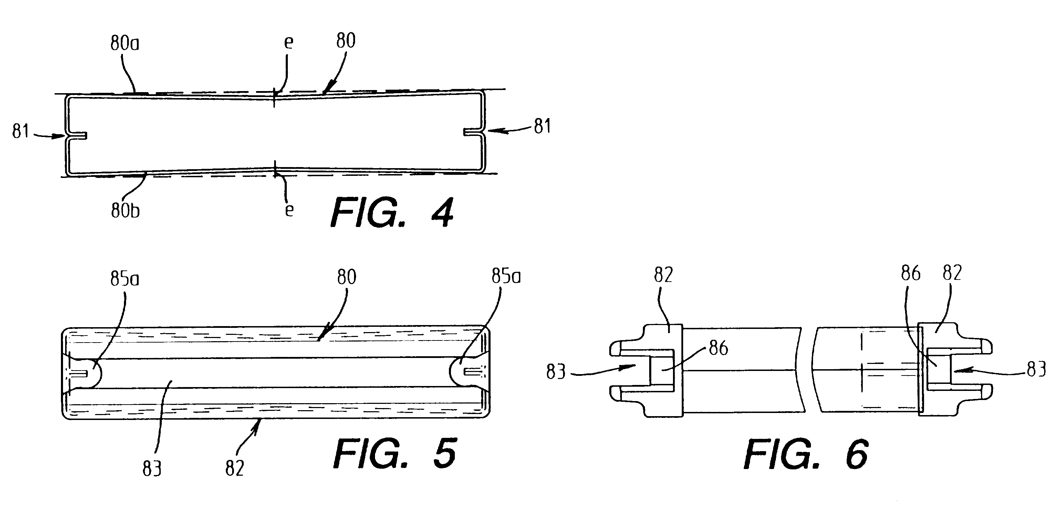

Les figures 3 à 7 représentent diverses vues des tablettes 15. La figure 3 montre cette tablette, vue de dessus, en place sur une gondole. La tablette proprement dite est constituée (voir fig. 4) d'un profil fermé 80, de préférence en acier inoxydable, qui est réalisé à partir de deux profilés ouverts 80a et 80b en forme de U qui sont assemblés le long de leurs rebords juxtaposés 81. Cet assemblage peut être réalisé par collage ou, de préférence, par soudure. Une technique de soudure au laser s'est avérée particulièrement efficace et garantit une étanchéité parfaite et une qualité de finition inégalable. Cette technique de soudure s'effectue avec un faible apport d'énergie qui n'induit pas de tensions susceptibles de modifier les dimensions ou la forme des tablettes. Grâce à cette technique on obtient une grande fidélité dimensionnelle de ces tablettes. L'étanchéité est essentielle pour pouvoir répondre aux normes d'hygiène imposées pour une utilisation alimentaire. Les deux profilés ouverts 80a et 80b sont conçus de telle manière qu'ils présentent un léger creux e en leur centre par rapport à leurs bords longitudinaux. Cette conception est particulièrement avantageuse en liaison avec certains produits à base plate tels que notamment des plaques de chocolat ou des produits similaires, pour assurer une meilleure stabilité du produit sur les tablettes, ces produits obtenus par moulage n'ayant pas toujours une surface de base parfaitement plane pour éviter un contact de friction des produits sur toute la surface de la tablette et par conséquent limiter l'encrassement de cette tablette.

Le profil fermé 80 est équipé à ses deux extrémités longitudinales de deux embouts 82 (voir figures 3, 5, 6 et 7) qui sont conçus pour s'emboîter à ses extrémités et pour assurer la fixation amovible des tablettes sur les gondoles. Ces embouts sont en matière synthétique, réalisés par moulage et assurent une fermeture étanche du profil 80 à ses extrémités. Les embouts 82 sont pourvus d'une gorge centrale 83 agencée pour coopérer avec des tétons 84 et 85 solidaires des supports latéraux 62 des gondoles 14, en assurant le maintien en position de la tablette. On notera que les tétons 84 sont plus courts que les tétons 85, ces derniers étant destinés à venir en butée contre un épaulement 86 qui constitue un arrêt de fin de course. En outre, les embouts 82 sont pourvus, dans la zone délimitée par ledit épaulement, d'un logement 85a récepteur dudit téton 85. Ce logement 85a présente une entrée de section légèrement inférieure à celle du téton. L'introduction de ce téton s'effectue grâce à l'élasticité de la matière dans laquelle sont réalisés les embouts, et plus particulièrement l'entrée dudit logement. Cette matière est avantageusement une matière synthétique thermoformable.

La mise en place de la tablette s'effectue par coulissement à faible friction jusqu'au moment où les tétons 85 se présentent à l'entrée des logements 85a. Leur introduction dans ces logements nécessite l'application d'une force d'encliquetage qui permet à ces tétons de passer les points durs constitués par lesdites entrées de section réduite. Lorsque les tétons 85 sont engagés dans les logements, la tablette est bloquée en position, cette position étant parfaitement définie par l'appui desdits tétons 85 contre les épaulements 86.

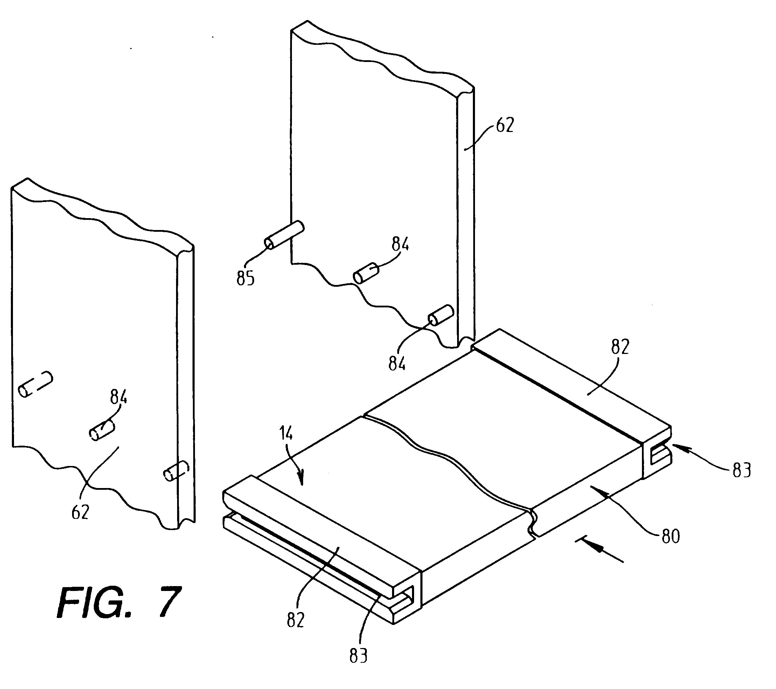

On notera qu'un deuxième téton court 84 peut être prévu sur les supports latéraux 62 pour faciliter la mise en place des tablettes, en assurant un meilleur guidage de ces tablettes (voir figure 7).

Par ailleurs, on notera la parfaite symétrie des tablettes, cette symétrie permettant à l'utilisateur de s'affranchir totalement de l'orientation desdites tablettes. L'une ou l'autre des deux faces d'appui peut être utilisée pour recevoir des produits. Les gorges 83 étant symétriques, le sens de l'introduction des tablettes dans les gondoles n'est pas défini.

On notera enfin que l'épaisseur des embouts 82 est légèrement supérieure à celle du profil 80, ce qui permet d'empiler les tablettes en superposant les embouts sans que les profilés formant la partie utile de la tablette se touchent.

Le retrait s'effectue de façon inverse, c'est-à-dire qu'il faut appliquer une force initiale opposée à la forme d'encliquetage pour débloquer la tablette, puis la retirer pratiquement sans effort.

Cette mise en place et ce retrait peuvent être effectués soit manuellement soit mécaniquement. Un dispositif de prélèvement et de mise en place automatique des tablettes peut être utilisé dans le cadre de cette installation grâce au fait que ces tablettes sont parfaitement symétriques donc réversibles. Quelle que soit l'orientation de ces tablettes dans le dispositif de prélèvement et de mise en place, ou dans une aire de stockage quelconque, elles peuvent être réintroduites dans les gondoles sans nécessiter de systèmes d'indexage ou de capteurs de position ou similaires.

## Revendications

1. Installation de stockage pendulaire pour stocker momentanément des produits, notamment des produits alimentaires et plus particulièrement des plaques de chocolat ou similaires, ces produits étant déposés sur des tablettes disposées horizontalement sur des gondoles pendues horizontalement à deux chaînes cheminant parallèlement entre elles sur un circuit fermé, cette installation comprenant une section d'alimentation allant d'une station de dépôt des produits sur les tablettes, à une station réceptrice de ces produits agencée pour décharger les tablettes, et une section de retour dans laquelle les tablettes sont ramenées vides de la station réceptrice à la station de dépôt, caractérisée en ce que les gondoles (14) sont pourvues de moyens pour recevoir plusieurs tablettes amovibles (15) horizontales disposées parallèlement entre elles selon un écartement constant, ces tablettes constituant chacune un plateau agencé pour recevoir au moins une rangée de produits similaires, et en ce que lesdites tablettes amovibles comportent un profil fermé (80) et deux embouts (82) agencés pour s'emboîter sur ce profil fermé, à ses extrémités longitudinales,
lesdits embouts (82) comportant des moyens pour assurer la fixation des tablettes sur les gondoles, et
lesdits moyens comportant une gorge centrale (83) ménagée dans lesdits embouts (82) et des tétons (84, 85) solidaires des supports latéraux (62) des gondoles (14) et agencés pour s'engager dans ladite gorge centrale.

2. Installation selon la revendication 1, caractérisée en ce que l'un (85) desdits tétons est plus long que l'autre (84).

3. Installation selon la revendication 2, caractérisée en ce que ledit téton long (85) ayant une longueur supérieure à celle de l'autre téton court (84) est agencé pour coopérer avec un épaulement (86) dudit embout pour définir une position en butée de la tablette par rapport à la gondole.

4. Installation selon la revendication 3, caractérisée en ce que lesdits embouts (82) comportent au moins un logement agencé pour recevoir ledit téton long (85), ce logement ayant une entrée dont la section est légèrement inférieure à celle dudit téton, les parois de cette entrée ayant une élasticité suffisante pour permettre un encliquetage du téton dans le logement.

5. Installation selon la revendication 3, caractérisée en ce que les tablettes ont une forme symétrique, chaque embout comportant deux logements disposés aux extrémités de la gorge centrale et agencés pour recevoir un téton long (85).

6. Installation selon la revendication 1, caractérisée en ce que l'épaisseur des embouts (82) est supérieure à l'épaisseur du profil fermé (80).

7. Installation selon la revendication 1, caractérisée en ce que les embouts assurent une fermeture étanche du profil fermé (80) à ses extrémités longitudinales.

8. Installation selon la revendication 1, caractérisée en ce que ledit profil fermé (80) est réalisé par un couplage rigide de deux profilés (80a et 80b) en forme de U, ces profilés étant joints le long de leurs bords de manière à réaliser un profil creux.

9. Installation selon la revendication 8, caractérisée en ce que ledit couplage est réalisé par une soudure au laser.

10. Installation selon la revendication 9, caractérisée en ce que les deux faces de la tablette (15) présentent un creux le long d'une ligne centrale parallèle à leurs bords.

## Patentansprüche

1. Pendelartige Lagereinrichtung zum vorübergehenden Lagern von Gegenständen, besonders von Nahrungsmitteln und vor allem von Schokoladetafeln oder etwas ähnlichem, wobei diese Produkte auf Tabletts aufgelegt sind, die horizontal an Gondeln angeordnet sind, welche horizontal an zwei zueinander parallelen, sich langsam auf einer geschlossenen Bahn fortbewegenden Ketten aufgehängt sind, wobei diese Einrichtung einen Zuführungsabschnitt aufweist mit einer Station zum Auflegen der Produkte auf die Tabletts, an die sich eine Abnahmestation für diese Produkte anschließt, die dazu dient, die Tabletts zu entleeren, und einen Rückführungsabschnitt, in welchem die Tabletts leer von der Abnahmestation zur Auflegestation zurückgeführt werden,
**dadurch gekennzeichnet,** daß
die Gondeln (14) mit Einrichtungen versehen sind, um mehrere herausnehmbare, horizontale Tabletts (15) aufzunehmen, die zueinander parallel und mit konstantem Abstand angeordnet sind, wobei diese Tabletts jeweils eine Platte bilden, die geeignet ist, mindestens eine Reihe von gleichartigen Produkten aufzunehmen, und daß diese herausnehmbaren Tabletts ein geschlossenes Profil (80) aufweisen, sowie zwei Endstücke (82), die man an diesem geschlossenen Profil an seine Enden stecken kann, wobei diese Endstücke (82) Mittel aufweisen, um die Befestigung der Tabletts an den Gondeln zu gewährleisten, und diese Mittel eine zentrale Kehle (83) aufweisen, die in diesen Endstücken (82) angebracht ist, sowie Zapfen (84,85), die fest mit den seitlichen Halterungen (62) der Gondeln (14) verbunden sind, und die so ausgeführt sind, daß sie sich in die zentrale Kehle einführen lassen.

2. Einrichtung nach Anspruch 1,
**dadurch gekennzeichnet,** daß
der eine (85) der Zapfen länger ist als der andere (84).

3. Einrichtung nach Anspruch 2,
**dadurch gekennzeichnet,** daß
der lange Zapfen (85), der eine Länge hat, die größer ist als die des anderen, kurzen Zapfens (84) so ausgeführt ist, daß er mit einem Vorsprung (86) des Endstückes zusammenarbeitet, um eine Anschlagstellung für das Tablett bezüglich der Gondel festzulegen.

4. Einrichtung nach Anspruch 3,
**dadurch gekennzeichnet,** daß
die Endstücke (82) mindestens einen Sitz aufweisen, der so ausgeführt ist, daß er den langen Zapfen (85) aufnehmen kann, wobei dieser Sitz eine Einführstelle hat, deren Querschnitt etwas kleiner ist als der des Zapfens, und daß die Wände dieser Einführstelle eine ausreichende Elastizität haben, um ein Einrasten des Zapfens in dem Sitz zu ermöglichen.

5. Einrichtung nach Anspruch 3,
**dadurch gekennzeichnet,** daß
die Tabletts eine symmetrische Form haben, wobei jedes Endstück zwei an den Enden der zentralen Kehle angeordnete Sitze aufweist, die so ausgeführt sind, daß sie einen langen Zapfen (85) aufnehmen können.

6. Einrichtung nach Anspruch 1,
**dadurch gekennzeichnet,** daß
die Dicke der Endstücke (82) größer ist als die Dicke des geschlossenen Profils (80).

7. Einrichtung nach Anspruch 1,
**dadurch gekennzeichnet,** daß
die Endstücke einen dichten Verschluß des geschlossenen Profils (80) an dessen Enden gewährleisten.

8. Einrichtung nach Anspruch 1,
**dadurch gekennzeichnet,** daß
das geschlossene Profil (80) durch eine starre Verbindung von zwei U-förmigen Profilen (80a,80b) zustande kommt, wobei die Profile entlang ihrer Ränder verbunden sind, um ein hohles Profil zu bilden.

9. Einrichtung nach Anspruch 8,
**dadurch gekennzeichnet,** daß
diese Verbindung durch eine Laserschweißung erreicht wird.

10. Einrichtung nach Anspruch 9,
**dadurch gekennzeichnet,** daß
die zwei Flächen des Tabletts (15) entlang einer parallel zu seinen Rändern liegenden Mittellinie eine Vertiefung aufweisen.

## Claims

1. Pendulant storage device for temporarily storing products, in particular food products and more particularly bars of chocolate or the like, these products being placed on shelves arranged horizontally on pendulant product carriers horizontally suspended on two chains moving parallel to each other in a closed circuit, this installation comprising a feed section going from a station for loading products on the shelves, to a product receiving station arranged for unloading the shelves, and a return section in which the empty shelves are brought back from the receiving station to the loading station, characterised in that the pendulant product carriers (14) are provided with means for receiving several removable horizontal shelves (15) arranged parallel to each other at a constant spacing, each of these shelves constituting a tray arranged for receiving at least one row of similar products, and in that said removable shelves comprise a closed profile (80) and two end fitting pieces (82) arranged for fitting onto this closed profile, at its longitudinal ends, said end fitting pieces (82) comprising means for assuring the fixing of the shelves on the pendulant product carriers, and said means comprising a central groove (83) arranged in said end fitting pieces (82) and nipples (84, 85) which are attached to lateral supports (62) of the pendulant product carriers (14) and which are arranged for engaging in said central groove.

2. Installation according to claim 1, characterised in that one (85) of said nipples is longer than the other (84).

3. nstallation according to claim 2, characterised in that said long nipple (85) having a greater length than that of the other short nipple (84) is arranged for co-operating with a shoulder (86) of said end fitting piece to define an end of travel stop position of the shelf in relation to the pendulant product carrier.

4. Installation according to claim 3, characterised in that said end fitting pieces (82) comprise at least one recess arranged for receiving said long nipple (85), this recess having an opening whose cross-section is slightly smaller than that of said nipple, the walls of this opening having sufficient elasticity to enable the nipple to snap fit into the recess.

5. Installation according to claim 3, characterised in that the shelves have a symmetrical shape, each end fitting piece comprising two recesses arranged at the ends of the central groove and arranged for receiving a long nipple (85).

6. Installation according to claim 1, characterised in that the thickness of the end fitting pieces (82) is greater than the thickness of the closed profile (80).

7. Installation according to claim 1, characterised in that the end fitting pieces assure a sealing of the closed profile (80) at its longitudinal ends.

8. Installation according to claim 1, characterised in that said closed profile (80) is formed by a rigid connection of two U-shaped profiles (80a and 80b), these profiles being joined along their edges so as to form a hollow profile.

9. Installation according to claim 8, characterised in that said connection is achieved by laser welding.

10. Installation according to claim 9, characterised in that the two faces of the shelf (15) have a dip along a central line parallel to their edges.
